# EUROPÄISCHE PATENTSCHRIFT

(11) **EP 1 434 814 B1**
(45) Veröffentlichungstag und Bekanntmachung des Hinweises auf die Patenterteilung: **13.02.2008**
(21) Anmeldenummer: 02776781.3
(22) Anmeldetag: 04.10.2002
(51) Int. Cl.: C08J 5/00, C08J 5/06, C08J 5/04, C08K 7/02, C08K 3/08

(54) **VERFAHREN ZUR HERSTELLUNG ELEKTRISCH LEITFÄHIGER POLYMERVERBUNDE MIT ELEKTROMAGNETISCH ABSCHIRMENDER FUNKTION**
METHOD FOR PRODUCING ELECTROCONDUCTIVE POLYMER COMPOSITES HAVING AN ELECTROMAGNETIC SHIELDING FUNCTION
PROCEDE POUR PRODUIRE DES COMPOSITES POLYMERES ELECTROCONDUCTEURS A FONCTION DE BLINDAGE ELECTROMAGNETIQUE

(30) Priorität: 09.10.2001 DE 10149645
(43) Veröffentlichungstag der Anmeldung: 07.07.2004
(73) Patentinhaber: THÜRINGISCHES INSTITUT FÜR TEXTIL- UND KUNSTSTOFF-FORSCHUNG e.V., 07407 Rudolstadt (DE)
(72) Erfinder: PFLUG, Günther, 07407 Rudolstadt (DE); REINEMANN, Stefan, 07407 Rudolstadt (DE)
(74) Vertreter: Wablat, Wolfgang
(86) Internationale Anmeldenummer: PCT/DE2002/003753
(87) Internationale Veröffentlichungsnummer: WO 2003/033573

(56) Entgegenhaltungen:
- DE-A- 4 316 607
- DE-C- 335 185
- US-A- 5 599 585

## Beschreibung

Die Erfindung betrifft ein Verfahren zur Herstellung elektrisch leitfähiger Polymerverbunde für eine wirksame Abschirmung elektromagnetischer Wellen und Felder, bei dem zur Ausbildung eines durchgängigen leitfähigen Netzwerkes bzw. leitfähiger Schichten metallgecoatete Acrylfasern, hoher Zähigkeit und Festigkeit, als textile Flächengebilde in Kunststoffmatrizes inkorporiert werden.

Das textile Flächengebilde aus duktilen, hochfesten, metallbeschichteten Acrylfasern wird unter weitgehender Erhaltung mechanischer und elektrischer Eigenschaften als elektrisch leitfähige Komponente in thermoplastische oder duromere Polymermatrizes einarbeitet, so dass die gewonnenen Kunststoffverbunde bei Widerständen < 0,025 Ω cm und einer spezifischen Leitfähigkeit von mindestens 40Scm⁻¹ für den Schutz vor elektromagnetischer Beeinflussung eingesetzt werden können und sich durch ein verbessertes Festigkeits-und Zähigkeitsniveau auszeichnen.

### [Stand der Technik]

Aus den Untersuchungen von Möbius, veröffentlicht in Kunststoffe 78 (1988) 4 Seite 345-350-"Elektromagnetische Abschirmung mit elektrisch leitfähigen Kunststoffen" ist bekannt, dass in Kunststoffmaterialien erst bei Durchgangswiderständen <1 Ω cm bzw. Volumenleitfähigkeiten >1 Scm⁻¹ ein merklicher Abschirmeffekt gegenüber elektromagnetischer Interferenz (E-MI) sichtbar wird.

Die erforderlichen hohen Volumenleitfähigkeiten der Kunststoffe werden, wie z. B. aus der Studie von Leute "Kunststoffe und EMV-Elektromagnetische Verträglichkeit mit leitfähigen Kunststoffen", Kapitel 4, Seite 112-124, Carl Hanser Verlag 1997, zu entnehmen, bisher nur durch Einarbeitung langer rostfreier Stahlfasern, Kohlenstofffasern, insbesondere mittels metallisierter Graphitfasern und z. T. durch Metallflakes erreicht. Hierzu wird in der betreffenden Kunststoffmatrix ein durchgängiges Netzwerk stromleitender Pfade erzeugt, was aber eine Mindestkonzentration des elektrisch leitfähigen Füllstoffs im Polymer erfordert. Durch Einsatz elektrisch leitfähiger Zusätze mit faserförmiger Füllteilchengeometrie, d. h., mit hohem Länge/Breite-Verhältnis, kann die kritische Konzentration für die Ausbildung des elektrisch leitfähigen Netzwerkes in einer Matrix gegenüber einem leitfähigen Additiv mit kugelförmigen Partikeln drastisch gesenkt werden. Entsprechend den Ausführungen von Leute zum 8. Symposium, "Elektrisch leitende Kunststoffe", aus dem Jahre 1999 in Ostfildern im Vortrag "Prinzipien der elektromagnetischen Abschirmung mit leitfähigen Kunststoffen" muss ein Kunststoffmaterial für eine effiziente Abschirmung von elektromagnetischen Wellen und Feldern mindestens 10 Masse-% (Ma%) langer Edelstahlfasern (ca. 1,4 Volumenprozent) enthalten. Stahlfasergefüllte Polymere in der Studie von Borgsmans und Eltink in Kunststoffe 87 (1997) 4 Seite 494-496 erreichen bei einer Frequenz von 1000 MHz für Materialschichtdicken von 3 mm bei einem Faseranteil von 6 Ma% (=1 Vol%) zwischen 40 bis 55 Dezibel (dB) und für 10 Ma% (=1,5 Vol%) zwischen 50 bis 65 dB.

Bei 6 bis 10 Ma% Stahlfasergehalt ist die spezifische Leitfähigkeit etwa im Bereich von 2 bis 30 S/cm angesiedelt.

Durch den Einsatz der Stahlfasern in die Polymermatrix sollen die mechanischen Eigenschaften des elektrisch leitfähigen Kunststoffes, wie Festigkeit und Steifigkeit sowie die Materialrialzähigkeit, gegenüber dem Ausgangsmaterial möglichst unverändert bleiben. Der Nachteil dieser elektrisch leitfähigen Kunststoffe besteht darin, daß man die Materialien daher nur in Anwendungen mit verhältnismäßig geringer mechanischer Beanspruchung einsetzen kann.

Zur Herstellung abschirmender C-Faser-Polymerverbunde eignen sich nur metallisierte Kohlenstofffasern (z. B. mit Nickel gecoatet), da die erforderlichen hohen elektrischen Leitfähigkeiten mit üblichen Kohlenstofffasern nicht zu erreichen sind.

An Hand der Ergebnisse von Jones in "Guide to Short Fiber Reinforced Plastics" S.64 und Tabelle 4.4, Carl Hanser Verlag 1998 wird ersichtlich, daß sich in elektrisch leitfähigen Kunststoffverbunden mit metallisierten Graphitfasern eine entsprechende Abschirmungwirkung eines Kunststoffes mit 10 Ma % Stahlfasern erst bei C-Fasern gehalten von mindestens 15 Ma% realisieren läßt.

Beim Einbringen metallisierter Kohlenstofffasern wird auch die Festigkeit und Steifigkeit des elektrisch leitfähigen Verbundes gegenüber dem unverstärktem nichtleitenden Kunststoff deutlich angehoben. Nachteilig ist jedoch die höhere Sprödigkeit dieser Kunststoffverbunde.

Metallflakes, insbesondere aus Aluminium, sind als elektrisch leitfähiges Additiv für Kunststoffe zwar prinzipiell einsetzbar, verfügen aber über keine langgestreckte Partikelgeometrie. Zur Herstellung abschirmender Kunststoffe müssen Gehalte von mindestens 40 Masseprozent Metallfakes in die Matrizes eingebracht werden. Ein Vergleich der metallflakeshaltigen Verbunde mit Stahlfaser-Compounds durch Schaumburg in " Polymere- Werkstoffe und Bauelemente der Elektrotechnik" S. 480, Teubner Stuttgart , 1997 läßt auf eine Abnahme der Materialzähigkeit schließen. Die Zunahme der Sprödigkeit und auch die zu erwartende Verringerung der Festigkeit und der Anstieg des spezifischen Gewichtes stellen sich bei einer Applikation dieses leitfähigen Kunststoffmaterials als nachteilig heraus.

Rußgefüllte Kunststoffe sind insbesondere für den Schutz vor elektrostatischer Entladung sehr gut geeignet. Der erforderliche Widerstand <1 Ω cm bzw. die benötigte elektrische Leitfähigkeit > 1 S/cm für EMV-Anwendungen sind entweder nicht oder nur bei speziellen Graphittypen zum Beispiel vom Printextyp erreichbar, was aber Füllgrade oberhalb 20% erfordert. Dieser Nachteil ist, ähnlich wie beim Einsatz nichtmetallisierter Kohlenstofffasern in Kunststoffen, auf den unzureichenden Kontakt der Rußteilchen in den Matrizes durch die Anwesenheit sauerstoffhaltiger funktioneller Gruppen an der Graphitoberflächen zurückzuführen. Eine ausführliche Darstellung zu den rußgefüllten Kunststoffen findet man bei Mair/Roth in " Elektrisch leitende Kunststoffe" im Beitrag von Gilg " Ruß für leitfähige Kunststoffe"., Carl Hanser Verlag, 1989 und im Vortrag von Gilg zum 8. Symposium "Elektrisch leitende Kunststoffe", im Jahre 1999 in Ostfildern "Ruß und andere Pigmente für leitfähige Kunststoffe ".

Die Einarbeitung metallisierter Glasfasern stellt eine weitere Möglichkeit zur Herstellung elektrisch leitfähiger Kunststoffe dar.

Obwohl spezielle Verfahren zur Herstellung metallbeschichteter Glasfasern, z. B. in den Patenten von Asahi Glass Co., Ltd JP 60077151 AA und von Mitsubishi Electric Corp. Japan JP 58167454 AA für den Einsatz in Polymere mit abschirmender Funktion beansprucht werden, ist bei deren Einbringen in einem Kunststoffverbund nur unzureichende EMV-Wirksamkeit gegeben. Dieses wird durch Leute in "Kunststoffe und EMV - Elektromagnetische Verträglichkeit mit leitfähigen Kunststoffen" , Kapitel 4 Seite 112-124, Carl Hanser Verlag 1997 insbesondere mit der zu geringen elektrischen Leitfähigkeit dieser steifen Fasern in den Polymermatrizes begründet.

Offenbar sind, in Analogie zu den C-faserhaltigen Kunststoffen, hierfür die hohen Kontaktwiderstände zwischen einzelnen Fasern in der Matrix verantwortlich, wobei das Substratmaterial (Glas) dieser metallisierten Fasern selbst nicht zur Leitfähigkeit beitragen kann.

Der Schutz gegen EMI durch elektrisch leitfähige Synthesefasern in Form eines textilen Flächengebildes im Widerstandsbereich 10⁻²-10⁻⁴ Ω cm wird in zahlreichen Studien und Patenten beschrieben. Nur ein verhältnismässig kleiner Teil dieser Arbeiten befasst sich davon aber mit metallisierten Acrylfasern. Hierzu sind z. B. die Ausführungen von L.D. Temmerman in Chemiefasern/Textilindustrie 41/93, T 120 von 1991 mit dem Titel "Neue metallisierende Materialien für die EMI/RFI-Abschirmung" und der Daiwabo Co Ltd in High Performance Textiles von 1998, Oktober page 4 "Fibre to adsorb electromagnetic radiation from electronic devices" bekannt. Zu erwähnen ist auch die Entwicklung der mit Kupfersulfid leitfähig modifizierten Acrylfaser Nitril-Static® für den Vliesstoffsektor am Faserinstitut Lodz, die im Jahr 1998 auf der 4. Dresdner Textilkonferenz durch J. Koprowska und C. Vogel unter der Thematik "Neue leitfähige Fasern für Kleidung zum Schutz gegen elektrostatische und elektromagnetische Gefahren" vorgestellt wurde.

Auf Grund der hohen Anzahl reaktiver Nitrilgruppen können Beschichtungen verschiedenster Metalle physikalisch und auch chemisch u. a. auf einer Acrylfaseroberfläche aufgebracht werden.

Zu nennen ist hier die Offenlegungsschrift der Bayer AG DE 2847485A1, die die nasschemische Beschichtung von synthetischen Polymeren u. a. auch Acrylfasern in einem textilen Flächengebilde mittels Nickel, Kobald, Kupfer, Silber und Gold in verschiedenen Schichten oder auch Legierungen dieser Metalle beansprucht, um als reflektierendes Material vor Mikrowellen-und Hochfrequenzstrahlung zu schützen bzw. um als Reflektor von Radarwellen in Luft-Land-und Seefahrzeugen oder Geräten eingesetzt zu werden. Der Einsatz der metallisierten Synthesefasern als textiles Flächengebilde führt zwar zur Radarortbarkeit, jedoch nicht zwangsläufig zu einer wirksamen Abschirmung elektromagnetischer Wellen und Felder. Insbesondere liegen bei Anwendungen Ni-beschichteter Acrylfaser in einem Gestrick im hohen Frequenzbereich von 1,7 bis 24,5 GHz ermittelte Dämpfungswerte durch Reflexionsverluste sowohl unter mechanischer Zugspannung als auch spannunglos bei maximal 6 bzw. 3 dB (Beispiel 5). Eine mögliche und geeignete Wirkung im Polymerverbund ist jedoch nicht beschrieben.

In der Studie von Marchini in Chemiefasern/Textilindustrie 40/92. Jhrg. Dez. 1990, "Metallisierte Fasern zum Schutz gegen Elektrostatik und Strahlung" und in High Performence Textiles S.2-5 April /1992, "Metal-coated fibres", wird der Einsatz leitfähiger Gewebe und Vliese aus metallisierter

Acrylfaser vom Typ Texmet in Oberflächenschichten von Verbundstoffen zum Schutz vor Blitzeinschlägen und als gummibeschichtetes leitfähiges Material für hohe Radarreflektion beschrieben.

Obwohl auch mögliche Applikationen der metallisierten Acrylfaser zum Schutz vor EMI im textilen Bereich für Schutzbekleidung, leitfähige Dichtungen oder zur Auskleidung von Räumen in Krankenhäusern aber auch in Verbundstoffen durch den genannten Autor erörtert werden, ist das Einbringen der leitfähigen Synthesefasern in die Kunststoffmatrizes und der Aufbau von elektrisch leitfähigen Kunststoffverbunden mit abschirmender Funktion verfahrenseitig ungelöst.

Das Patent DE 19617352 C1 der FhG Forschung beansprucht ein Polymermaterial das mindestens einer Temperaturbehandlung zwischen 200 bis 3000°C unterzogen wurde und u. a. aus Polyacrylnitril bzw,. Polyacrylnitril-Copolymeren bestehen kann, wobei auf das Material zur Abschirmung elektromagnetischer Strahlung mindestens eine Metallschicht oder leitfähige ionogene Verbindungen oder Metallsalze aufgebracht sind. Verfahrensseitig ungelöst ist jedoch ein Weg zur schonenden Einarbeitung insbesondere von metallisierten Fasern bzw. textilen Flächengebilden aus Polyacrylnitril bzw. Polyacrylnitrilcopolymeren, um außer einer hinreichenden Abschirmwirkung auch ein bestimmtes Festigkeits- und Zähigkeitsniveau der Verbunde zu erreichen.

In den Publikationen von Artemenko und Mitarbeitern " Elektrisch leitfähige Polymercomposites" in Plast. Massy 3 (1990) S. 71-72 und " Metallisierte Acrylfasern als Verstärkungsfüllstoff für elektrisch leitfähige Polymercomposites" in Khim. Volokna 4(1992) S.39-41 werden mit Nickelsalzen leitfähig ausgerüstete bzw. mit Nickel metallisierte Acrylfasern in Epoxidharze eingearbeitet.

Nachteilig ist der deutliche Abfall der Zug- und Biegefestigkeit der Composites beim Einbringen der metallisierten Acrylfasern gegenüber einem Epoxidharzverbund mit unbehandelter PAN-Faser, was für unterschiedliche Gehalte Nickel der metallisierten Fasern belegt ist.

Trotz eines gewissen Anstiegs der feinheitsbezogenen Reißkraft der metallisierten Acrylfasern mit zunehmenden Anteil Nickel bis etwa 5 Ma%, verringert sich die Materialfestigkeit der hergestellten PAN-Faser/Epoxidharz -Verbunde.

Durch Einsatz metallisierter Vliese oder Gewebe, die entweder längere bzw. endlos lange PAN-Fasern enthalten, stehen zur Anbindung pro Fasern an die Polymermatrix aber wesentlich mehr Faseroberfläche und somit mehr Anknüpfungspunkte, insbesondere funktionelle Gruppen, zur Verfügung, so daß hier mindestens die Verbundfestigkeit eines Epoxidharzes mit einer unbehandelten Acrylfaser erreicht werden sollte.

Die beobachtete Festigkeitsabnahme der Composites bei Verwendung metallisierter PAN-Fasern müßte sich aber auch durch gleichzeitiges Einbringen metallisierter Vliese oder Gewebe und Einsatz eines geeigneten Haftvermittlers in der Polymermatrix beheben lassen. Nachteilig ist, daß in den zitierten Arbeiten nicht die Anhebung der Festigkeit der PAN-Faser/Epoxidharz-Verbunde mittels eines Haftvermittlers untersucht wird.

Bekannt ist auch aus EP 25927 A2 der Bayer AG, daß ein Verfahren zur Herstellung vergoldeter metallisierter Flächengebilde, Garne und Fasern, wobei auf eine bereits vorhandene Schicht auf der Faseroberfläche, die aus Kupfer oder Nikkel/Kupfer besteht, stromlos und naßchemisch Gold abgeschieden und so ein Material mit textilem Charakter und gleichzeitig hohem Reflexions- und Absorptionsvermögen gegenüber elektromagnetischer Strahlung gewonnen wird. Nachteilig zu werten ist, daß eine doppelte Metallschicht, äußere Schicht Gold, aufgebracht wird, was einen weiteren Verfahrensschritt erfordert und mit höheren Kosten behaftet ist.

### [Aufgabe der Erfindung]

Der Erfindung liegt die Aufgabe zugrunde, ein Verfahren zur Herstellung eines elektrisch leitfähigen Polymerverbundes mit elektromagnetisch abschirmender Funktion zu entwickeln, um für den Schutz vor EMI einen elektrisch leitfähigen Verbundwerkstoff mit einem niedrigen elektrischen Widerstand sowie einer hinreichenden Abschirmwirkung gegenüber elektromagnetischen Wellen und Felder und darüber hinaus verbesserten Materialzähigkeit und -festigkeit zu gewinnen.

Diese Aufgabe wird dadurch gelöst, daß chemisch oder physikalisch metallbeschichtete Acrylfasern in Form eines textilen Flächengebildes durch eine schonende, Faserstruktur erhaltende Einarbeitung, unter Erhalt elektrischer und mechanischer Eigenschaften, durch Verpressen oder mittels Spritzguß in eine thermoplastische Kunststoffmatrix oder mittels Laminieren oder durch einen Wickelprozeß in ein duroplastisches Polymermaterial, in die Polymermatrix eingebracht werden. Die A1-,Ni-, Co-, Cu-oder Ag-beschichteten oder mit einer Legierung der genannten Metalle beaufschlagten Gewebe oder Vliese aus Acrylfasern müssen erfindungsgemäß hierzu bereits über einen Widerstand < 1 Ω cm verfügen bzw. eine elektrische Leitfähigkeit > 1 Scm⁻¹ aufweisen. Herstellungsbedingt ist eine gewisse Abminderung bei den mechanischen Eigenschaften Festigkeit und Dehnung der metallisierten Acrylfasern gegenüber einer unbehandelten Substratfaser zu erwarten, wobei aber für den Einsatz des metallisierten Fasermaterials in eine polymere Verbundstruktur nachfolgende Toleranzwerte einzuhalten sind. Die in den textilen Flächengebilde verarbeiteten Filamente oder Fasern sollen bei Faserfeinheiten zwischen1 bis 3,2 Dezitex(dtex) [g/10.000 m] ohne und mit Metallisierung Reißfestigkeiten zwischen 500 bis 1100 MPa und Reissdehnungswerte von 5 bis 25% aufweisen.

Das flächenbezogene Gewicht der eingesetzten textilen Flächengebilde liegt vorzugsweise zwischen 50-500g/m², wovon 5 bis 20% des Flächengewichts auf die metallische Beschichtung entfallen. Im Falle 20%iger Metallauflage auf den textilen Flächengebilden ergeben sich für die Schwermetalle Ni, Co, Cu oder Ag bzw. einer Legierung aus diesen Elementen bei Einzeltiterwerten der unbehandelten Acrylsubstratfaser von 1 bis 3 dtex [g/10.000 m] mittlere Schichtdicken auf den Fasern von etwa 0,1 bis 0,2 µm und für das Leichtmetall Al bzw. einer Legierung mit hohem Anteil dieses Metalls ca. 0,3 bis 0,5 µm. Die erfindungsgemässe Einarbeitung der metallisierten Gewebe oder Vliese erfolgt bei Temperaturen von 150 bis 220°C in thermoplastische Matrizes wie Polyethylen hoher Dichte (HDPE), Polyethylen niedriger Dichte (LDPE), Polypropylen (PP), Polystyrol (PS), Styrol-Acrylnitril (SAN), Acrylnitril-Styrol-Acrylester (ASA), Acrylnitril-Butadien-Styrol (ABS) und auch in Polyamide Polymamid 11 (PA11) und Polymamid 12 (PA12) sowie in niedrig schmelzende Mischpolyamide aus Polymamid 6 (PA6) und Polymamid 6.6 (PA6.6) bei 180 bis 220°C mittels Hinter- oder Umspritzen sowie durch Heißverpressen der textilen Flächengebilde und Matrixfolien und von Hybridvliesen aus metallisierten Acrylfasern und Matrixfasern oder auch durch Laminier- oder im Wickelverfahren mit duroplastischen Matrizes wie Epoxidharze, ungesättigte Polyester und Polyurethane bei Prozesstemperaturen von 20°C bis maximal 150°C. Um den Anteil der metallisierten Acrylfasern in den Kunststoffmatrizes möglichst effektiv niedrig zu halten, wurden in den Kunstmatrizes sowohl metallisierte als auch nichtleitende textile Flächengebilde in unterschiedlicher Anordnung erfindungsgemäß schichtweise in die Verbundstrukturen inkorporiert.

Da die Acrylfasern in den metallisierten Geweben und Vliesen infolge ihrer Herstellung in bestimmte Vorzugrichtungen eingearbeitet oder orientiert sind, weisen die mechanischen und auch elektrischen Materialeigenschaften der textilen Flächengebilde allgemein einen anisotropen Charakter auf. Um in den elektrisch leitfähigen Verbunden eine möglichst geringe Richtungsabhängigkeit der Eigenschaften in der x-y-Ebene der Verbundstruktur zu erreichen, wurden die leitenden Gewebe bzw. Vlieslagen in der Schichtenfolge der Kunststoffmatrix entweder im Wechsel Kette -Schuß oder alternierend in 0 und 90° -Drehung zur Verarbeitungsrichtung aufgeschichtet.

Mit der hier beschriebene Anordnung der elektrisch leitfähigen Gewebe- oder Vlieslagen in den Verbundstrukturen erzielt man überraschenderweise auch eine stärkere Abschirmung gegenüber einwirkenden elektromagnetischen Feldern und Wellen.

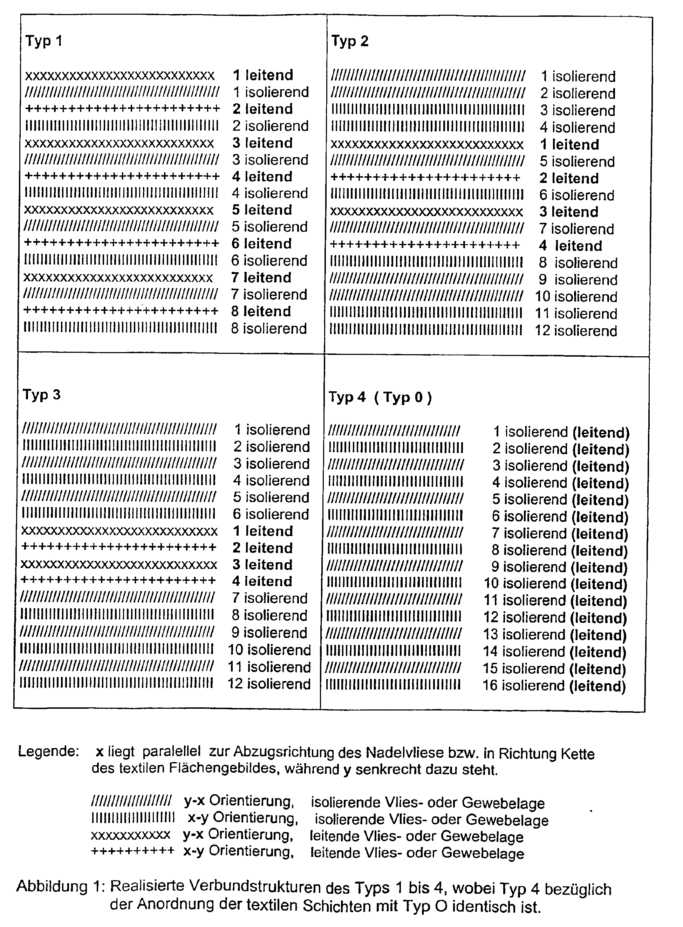

Die beanspruchten Polymermatrix-Verbunde mit metallisierten Schichten aus Acrylfasern werden in Abbildung 1 dargestellt. Diese Verbundaufbauten enthalten insgesamt 16 textile Schichten, wovon bei Typ 0 16 bei Typ 1 8 und den Typen 2 und 3 jeweils 4 Lagen metallbeschichtet sind. Anstelle eines Kunststoffverbundes mit 16 verwendeten textilen Flächengebilden kann aber für den konkreten Einsatz eines Polymermaterials mit abschirmender Funktion auch eine kleinere oder größere Anzahl Schichten erforderlich sein, wovon erfindungsgemäß alle oder nur ein Teil der Lagen metallisiert sind.

Beim Einbringen metallisierter und nichtmetallisierter textiler Flächengebilde in die Polymermatrizes wird entweder eine Verbundstruktur mit alternierender Anordnung leitender und isolierender Schichten, wie im Verbundtyp 1 und 2, oder ein leitfähiger Kernbereich, wie bei Verbundtyp 3, aufgebaut.

In den Verbundstrukturen vom Typ 1 und 2 wird die Leitfähigkeit in Richtung der metallisierten textilen Schichten jeweils in einer zweidimensionalen x-y- Ebene realisiert. Im Falle des Verbundtyps 3 werden benachbarte metallisierte Vlies- oder Gewebelagen miteinander in Kontakt gebracht, so daß sich ein leitfähiger Kernbereich in x-y- Richtung und zum Teil auch in die z-Richtung erstreckt.

In einer Verbundstruktur des Typs 1 bis 3 können statt der nichtmetallisierenden textilen Flächenschichten aus Acrylfasern auch isolierende bzw. ungecoatete Zwischenlagen aus einem Verstärkungsmaterial wie Glasfasern, Aramidfasern und Kohlenstofffasern eingebracht sein.

Beim Typ 0 enthält der Verbund nur leitfähige textile Schichten, während der zum Vergleich dargestellte Typ 4 aus nichtleitenden Vlies- oder Gewebelagen besteht. Typ 0 ist demnach durchgängig leitfähig und Typ 4 ein reiner Isolator. Spezifische elektrische Leitfähigkeiten der inkorporierten metallisierten textilen Schichten in den Verbundstrukturen liegen bei Verwendung Cu-beschichteter Acrylfasern bei Werten von mindestens 40 S/cm und bei Applikation Ag-beschichteter Acrylfasern bei mindestens 70 S/cm .

Durch Einarbeitung Cu-gecoateter Acrylfasern erreicht und im Falle Ag-beschichteter Fasermaterialien übertrifft man folglich, die beim Einsatz von 10 Ma% Stahlfasern in einem leitfähigen Kernbereich der stahlfaserverstärkten Kunststoffe üblichen Leitfähigkeitswerte von 30 bis 40 S/cm.

Für die Abschirmmessungen in einer TEM-Meßzelle eines Hilo-Testgrätes unter Fernfeldbedingungen wurden spezielle Probenscheiben von 100 mm Außen- und 30 mm Innendurchmesser von jeweils 3,1 mm Plattenstärke gefertigt. Vor der Messung wurden die mit der TEM-Meßzelle in Berührung stehenden Innen- und Außenränder der Probenscheiben mit Leitsilber kontaktiert. Die Verbundstruktur des Typ 2 verfügt überraschenderweise bei gleichem Gehalt an metallisierten Fasern über eine höhere Abschirmwirkung als der Typ 3.

Bereits bei 8 bis 9% Gehalt metallisierter Acrylfasern in den Polymermatrizes weisen die Verbundtypen 2 und 3 die Abschirmwirkung eines mit 10 Ma% gefüllten stahlfaserhaltigen Compounds auf. Vergleichbare Schirmdämpfungswerte von stahlfasergefüllten Polymeren liegen bei einer Frequenz von 1000 MHz, mit Materialschichtdicke von 3 mm und bei 6 Ma% Faseranteil (=1Vol%), zwischen 40 bis 55 dB und für 10 Ma% (=1,5 Vol%) zwischen 50 bis 65 dB.

Durch das Einbringen metallisierter Gewebe- oder Vlieslagen aus Acrylfasern in die Kunststoffmatrizes kann zusätzlich zur elektrisch leitfähigen und abschirmenden Funktion der textilen Flächengebilde im Verbund auch das mechanische Eigenschaftsniveau der faserverstärkten Strukturen verbessert werden. Dieses zeigt sich gegenüber dem unverstärkten Polymermaterial durch die deutlich angehobenen Festigkeits- und Steifigkeitskennwerte, wobei aber als weiterer Vorzug die verbesserte Duktilität dieser Materialien zu nennen ist, da auch die Kerbschlagzähigkeit im Vergleich zum unverstärkten Ausgangspolymeren stark ansteigt. Beim Einsatz der Acrylfasern konnte selbst bei einer schlagzähmodifizierten ASA-Type noch eine Zunahme in der Kerbschlagzähigkeit nachgewiesen werden. Die erwartete Abnahme der Festigkeits-und Steifig-keitseigenschaften mit zunehmender Substitution unbehandelteter und nichtleitfähiger Acrylfasern durch metallisierte textile Flächengebilde in den Verbundstrukturen ist überraschenderweise weder beim Polypropylen mit einem Haftvermittler auf Basis Maleinsäureanhydrid noch bei der ASA-Matrix ohne spezielle Ankopplung zu beobachten. Im Falle maleinsäureanhydridhaltiger Polypropylenmatrizes zeigt sich mit zunehmenden Anteil metallisierter Acrylfasern bzw. abnehmenden Gehalt ungecoateter Acrylfasern in den Verbundstrukturen eine deutliche Tendenz der Festigkeits-und Steifigkeitserhöhung.

Insbesondere der beobachtete Zuwachs an Materialfestigkeit der Polypropylen-Acrylvlies-Verbunde bei der Substitution von unbehandelteten Acrylfaservliesen durch metallisierte textile Flächengebilde, ist offenbar auf eine stärkere Anbindung zwischen der metallisierten Acrylfaseroberfläche und der funktionalisierten PP-Matrix zurückzuführen.

### [Beispiele]

### Beispiel

Acrylfasern mit einer Feinheit 2,2 dtex [g/10.000 m] und einer Schnittfaserlänge von 60 mm wurden zu einem Nadelvlies mit einem Flächengewicht von 65 bis 70g/m² verarbeitet und anschließend beidseitig mit Silber physikalisch beauflagt, wobei eine Metallauflage von 5g/m² bzw. ein Metallgehalt von durchschnittlich 6,8% realisiert wurde.

Die im Vlies enthaltenen metallisierten Acrylfasern wiesen eine Reißfestigkeit von 650 MPa und eine Reißdehnung von 17% auf. Anschliessend wurden metallisierte und nichtmetallisierte Vliese mit unterschiedlichem schichtenförmigen Aufbau, wie in der Abbildung 1 dargestellt, mit Matrixfolie aus dem Polypropylen PPU 1080 von 100 µm Foliendicke bei Temperaturen von 180°C und einem Druck von 125 bar in einer Werkzeugform zu einem plattenförmigen Halbzeug von 3,1 mm Dicke verpresst. Die PP-Matrixfolie enthielt 2% des Haftvermittlers Licomont TP AR 504 auf Basis eines maleinsäureanhydridgepropften Polypropylens. Tabelle 1 zeigt die elektrischen und mechanischen Eigenschaften der PP-Acrylfaser-Composites bei der Realisierung spezieller Verbundstrukturen und Gehalte an Ag-metallisierten und nichtmetallisierten Acrylfasern in einer PP-Matrix. Die leitfähigen Verbundtypen 2 und 3 weisen bei 8 bis 8,5% Fasergehalt an metallisierten Acrylfasern gegenüber elektromagnetischen Wellen und Feldern bei Frequenzen von 50 und 1000 MHz vergleichbare Schirmdämpfungswerte wie ein stahlfasergefülltes Polymermaterial mit 10 Ma% auf.

**Tabelle 1 : Ag-beschichtete Acrylfasern in Polypropylen**

| Eigenschaft Prüfung | Einheit | Referenz PP | PP-Acrylfaser-Verbund/Metallisierung | | | |
|---|---|---|---|---|---|---|
| | | | Typ 1/ Ag | Typ 2/ Ag | Typ 3/ Ag | Typ 4/ ohne Ag |
| Fasergehalt | % | 0 | 33,8 | 32,8 | 32,0 | 32,7 |
| Anzahl metallisierte Vlieslagen | | --- | 8 | 4 | 4 | 0 |
| metallisierte Fasern | % | 0 | 17,4 | 8,2 | 8,4 | 0 |
| Metallgehalt | % | 0 | 1,2 | 0,6 | 0,6 6 | 0 |
| Dichte DIN 55990 T3 | % | 0,91 | 0,998 | 0,989 | 0,984 | 0,981 |
| elektrische Leitfähigkeit¹⁾ | S/cm | 1x10⁻¹⁵ | >70 | >70 | >70 | 2x10⁻¹⁵ |
| Abschirmung SE²⁾ | dB | --- | --- | 57 | 48 | 0,2 |
| | (50 MHz) | | | | | |
| | dB | | | 55 | 41 | 1,0 |
| | (1GHz) | | | | | |
| Zugfestigkeit ISO 527-4 | MPa | 33,7 | 58,0 | 55,8 | 51,6 | 50,7 |
| Zug-E-Modul ISO 527-4 | MPa | 1600 | 2537 | 2451 | 2434 | 2339 |
| Kerbschlagzäh. ISO 179 | kJ/m² | 3 | --- | 34,0 | 30 | --- |

| | | | | | | |
|---|---|---|---|---|---|---|
| Anmerkung : 1) Widerstandsmessung nach DIN IEC 93 beim hochohmigen Kunststoff PP und dem PP-Acrylfaser Verbund ohne metallisierte Komponente, sonst 2-Polmessung im niederohmigen Bereich mittels Milli-T03. 2) Abschirmwerte unter Fernfeldbedingungen bei einer Frequenz von 50 und 1000 MHz. | | | | | | |

Trotz des analogen Gehalts leitfähiger Acrylfasern in den Verbundtypen 2 und 3 werden beim Typ 2 stets höhere Schirmdämpfungswerte gemessen. Die Durchlässigkeit gegenüber elektromagnetischen Wellen und Feldern ist bei 4 in der Tiefe gestaffelten elektrisch leitfähigen Schichten im Typ 2 demnach geringer, als im Falle einer einzigen, viermal dickeren Schicht im Typ 3.

Die mechanischen Eigenschaften Kerbschlagzähigkeit, Zugfestigkeit und Zug-E-Modul der Verbundtypen 1 bis 3 werden im Vergleich zum unverstärkten PP stark angehoben.

Mit zunehmenden Anteil an metallisierter Acrylfasern bzw. abnehmenden Gehalt der ungecoateten Acrylfasern in den Verbundstrukturen 4 bis 1 wird eine deutliche Tendenz einer Festigkeits-und Steifigkeitserhöhung sichtbar.

### Beispiel 2

**Tabelle 2 : Cu-beschichtete Acrylfasern in Polypropylen**

| | | | PP-Acrylfaser-Verbund / Metallisierung | | | | |
|---|---|---|---|---|---|---|---|
| Eigenschaft Prüfung | Einheit | Referenz PP | Typ 0/ Cu | Typ 1/ Cu | Typ 2/ Cu | Typ 3/ Cu | Typ 4/ ohne Cu |
| Fasergehalt | % | 0 | 35,2 | 34,0 | 32,8 | 34 | 32,7 |
| Anzahl metallisierte Vlieslagen | | --- | 16 | 8 | 4 | 4 | 0 |
| metallisierte Fasern | % | 0 | 35,2 | 17,3 | 9,2 | 9,3 | 0 |
| Metallgehalt | % | 0 | 6,9 | 3,4 | 1,8 | 1,8 | 0 |
| Dichte DIN 55990 T3 | % | 0,91 | 1,039 | 1,004 | 0,994 | 0,995 | 0,981 |
| elektrische Leitfähigkeit¹⁾ | S/cm | 10⁻¹⁵ | >40 | >40 | >40 | >40 | 2x10⁻¹⁵ |
| Abschirmung SE²⁾ | dB | --- | 71 | --- | 57 | 54 | 0,2 |
| | (50MHz) | | | | | | |
| | dB | | 67 | | 55 | 47 | 1,0 |
| | (1GHz) | | | | | | |
| Zugfestigkeit ISO 527-4 | MPa | 33,7 | 59,4 | 60,8 | 53,8 | 57,6 | 50,7 |
| Zug-E-Modul ISO 527-4 | MPa | 1600 | 2738 | 2672 | 2410 | 2647 | 2339 |
| Kerbschlagzäh. ISO 179 | kJ/m² | 3 | --- | --- | 29,4 | 26,5 | --- |

| | | | | | | | |
|---|---|---|---|---|---|---|---|
| Anmerkung : 1) Widerstandsmessung nach DIN IEC 93 beim hochohmigen Kunststoff PP und dem PP-Acrylfaser Verbund ohne metallisierte Komponente, sonst 2-Polmessung im niederohmigen Bereich mittels Milli-T03. 2) Abschirmwerte unter Fernfeldbedingungen bei einer Frequenz von 50 und 1000 MHz. | | | | | | | |

Acrylfasern mit einer Feinheit 2,2 dtex [g/10.000 m] und einer Schnittfaserlänge von 60 mm wurden zu einem Nadelvlies mit einem Flächengewicht von 65 bis 70g/m² verarbeitet und anschließend beidseitig mit Kupfer physikalisch beschichtet. Der Metallgehalt des Vlieses betrug hierbei durchschnittlich 19,6%, was einer Metallauflage von 16,4 g/m² entspricht. Die im Vlies enthaltenen metallisierten Acrylfasern wiesen eine Reißfestigkeit von 720 MPa und eine Reißdehnung von 18% auf. Metallisierte und nichtmetallisierte Vliese wurden dann mit unterschiedlichem schichtenförmigen Aufbau, wie in den Abbildung 1 dargestellt, mit PP-Matrixfolie von 100 µm Foliendikke bei Temperaturen von 180°C und einem Druck von 125 bar in einer Werkzeugform zu einem plattenförmigen Halbzeug von 3,1 mm Dicke verpresst. Die verwendete PP-Matrixfolie enthielt 2% maleinsäureanhydridgepropftes Polypropylen vom Typ Licomont TP AR 504.

Tabelle 2 stellt die gewonnenen elektrischen und mechanischen Eigenschaften der PP-Acrylfaser-Composites bei der Realisierung spezieller Verbundstrukturen und Gehalte an Cu-metallisierten und nichtmetallisierten Acrylfasern in einer PP-Matrix dar.

Die leitfähigen Verbundtypen 2 und 3 weisen bei 9 bis 9,5% Gehalt metallisierter Acrylfasern gegenüber elektromagnetischen Wellen und Feldern bei Frequenzen von 50 und 1000 MHz vergleichbare Schirmdämpfungswerte wie ein stahlfasergefülltes Polymermaterial mit 10 Ma% auf.

Obwohl in den Verbundtypen 2 und 3 ein analoger Anteil leitfähiger Acrylfasern vorliegt, werden aber beim Typ 2 stets höhere Schirmdämpfungswerte gemessen.

Die Durchlässigkeit von 4 in der Tiefe gestaffelten elektrisch leitfähigen Schichten ist im Typ 2 gegenüber elektromagnetischen Wellen und Feldern wiederum geringer als im Falle einer einzigen, viermal dickeren Schicht im Typ 3.

Die mechanischen Eigenschaften Kerbschlagzähigkeit, Zugfestigkeit und Zug-E-Modul der Verbundtypen 0, 1, 2 und 3 sind im Vergleich zum unverstärkten PP stark angehoben.

Bei der Substitution ungecoateter Acrylfasern im nichtleitfähigen Verbundtyp 4 durch metallisierte Acrylfasern ist in den leitfähigen Verbundstrukturen 0, 1, 2 und 3 immer ein Festigkeits-und Steifigkeitszuwachs zu verzeichnen.

### Beispiel 3

Acrylfasern mit einer Feinheit 2,2 dtex [g/10.000 m] und einer Schnittfaserlänge von 60 mm wurden zu einem Nadelvlies mit einem Flächengewicht von 65 bis 70g/m² verarbeitet und anschließend beidseitig mit Kupfer physikalisch beschichtet. Der Metallgehalt des Vlieses betrug durchschnittlich 19,6%, was einer Metallauflage von 16,4 g/m² entspricht. Die im Vlies enthaltenen metallisierten Acrylfasern wiesen eine Reissfestigkeit von 720 MPa und eine Reissdehnung von 18% auf. Anschliessend wurden metallisierte und nichtmetallisierte Vliese in unterschiedlicher schichtenförmiger Anordnung, wie in der Abbildung 1 dargestellt, mit Matrixfolie aus dem Acrylester-Styrol-Acrylnitril Luran S 797 SE von 120 µm Foliendicke bei Temperaturen von 190 bis 195 °C und einem Druck von 125 bar in einer Werkzeugform zu einem plattenförmigen Halbzeug von 3,1 mm Dicke verpresst.

Tabelle 3 zeigt gewonnene elektrische und mechanische Eigenschaften der ASA-Acrylfaser-Composites bei der Realisierung spezieller Verbundstrukturen und Gehalte an Cu-metallisierten und nichtmetallisierten Acrylfasern in einer ASA-Matrix. Die leitfähigen Verbundtypen 2 und 3 weisen bei 7,5 bis 8% Fasergehalt an metallisierten Acrylfasern gegenüber elektromagnetischen Wellen und Feldern bei Frequenzen von 50 und 1000 MHz vergleichbare Schirmdämpfungswerte wie ein stahlfasergefülltes Polymermaterial mit 10 Ma% auf.

Bei gleichem Anteil leitfähiger Acrylfasern in den Verbundtypen 2 und 3 werden beim Typ 2 aber stets höhere Schirmdämpfungswerte erreicht. Die Durchlässigkeit von 4 in der Tiefe gestaffelten elektrisch leitfähigen Schichten im Typ 2 ist gegenüber elektromagnetischen Wellen und Feldern deutlich geringer, als im Falle einer einzigen, viermal dickeren Schicht im Typ 3. Die mechanischen Eigenschaften Kerbschlagzähigkeit, Zugfestigkeit und Zug-E-Modul der Verbundtypen 1 bis 3 werden im Vergleich zu unverstärktem ASA stark angehoben. Obwohl der vorliegende ASA-Matrixkunststoff Luran S 797 SE für schlagzähe Anwendungen modifiziert wurde, wird durch Einsatz metallisierter und ungecoater Acrylfasern in den Typen 1 bis 3 noch ein zusätzlichen Anstieg der Materialzähigkeit erzielt.

**Tabelle 3 : Cu-beschichtete Acrylfasern in ASA**

| Eigenschaft Prüfung | Einheit | Referenz ASA | PP-Acrylfaser-Verbund /Metallisierung | | | |
|---|---|---|---|---|---|---|
| | | | Typ 1/ Ag | Typ 2/ Ag | Typ 3/ Ag | Typ 4/ ohne Ag |
| Fasergehalt | % | 0 | 30,7 | 31,3 | 31,5 | 30,8 |
| Anzahl metallisierte Vlieslagen | | --- | 8 | 4 | 4 | 0 |
| metallisierte Fasern | % | 0 | 15,4 | 7,85 | 7,9 | 0 |
| Metallgehalt | % | 0 | 3 | 1,5 | 1,5 | 0 |
| Dichte DIN 55990 T3 | % | 1,07 | 1,131 | 1,121 | 1,119 | 1,108 |
| elektrische Leitfähigkeit¹⁾ | S/cm | 1x10-14 | >40 | >40 | >40 | 1x10-14 |
| Abschirmung SE²⁾ | dB | --- | 62 | 60 | 52 | 0,9 |
| | (50 MHz) | | | | | |
| | dB | | 59 | 57 | 48 | 3,1 |
| | (1GHz) | | | | | |
| Zugfestigkeit ISO 527-4 | MPa | 42 | 63,3 | 63,4 | 64,7 | 62,6 |
| Zug-E-Modul ISO 527-4 | MPa | 2000 | 3306 | 3103 | 3010 | 3264 |
| Kerbschlagzäh. ISO 179 | kJ/m² | 30 | 35,6 | 37,0 | 35,6 | 36,5 |

| | | | | | | |
|---|---|---|---|---|---|---|
| Anmerkung : 1) Widerstandsmessung nach DIN IEC 93 beim hochohmigen Kunststoff ASA und dem ASA-Acrylfaser Verbund ohne metallisierte Komponente, sonst 2-Polmessung im niederohmigen Bereich mittels Milli-T03. 2) Abschirmwerte unter Fernfeldbedingungen bei einer Frequenz von 50 und 1000 MHz. | | | | | | |

## Patentansprüche

1. Verfahren zur Herstellung von leitfähigen faserverstärkten Polymerverbunden für den Schutz vor elektromagnetischer Interferenz mit verbessertem mechanischen Eigenschaftsniveau, **dadurch gekennzeichnet, dass** ein mit A1-, Ni-, Co-, Cu- oder Ag- beschichtetes oder mit einer Legierung dieser Metalle beschichtetes textiles Flächengebilde aus Acrylfasern oder Mischungen aus metallisierten Acrylfasern mit unbeschichteten Fasern, wobei die metallisierten Acrylfasern eine Faserfeinheit zwischen 1 bis 3,2 Dezitex [g/10.000 m], eine Faserreißfestigkeit von 500 bis 1100 MPa und Faserreißdehnung zwischen 5 bis 25% besitzen, mit einem Gesamtflächengewicht von 50 bis 500g/m² bei 2,5g/m² bis 100g/m² Metallauflage bzw. 5 bis 20% Flächengewicht des metallischen Coats in eine thermoplastische Polymermatrix mittels Hinter- oder Umspritzen sowie Heißverpressen bei 150 bis 220°C oder Laminier- oder Wickelverfahren mit duroplastischer Matrix bei 20 bis 150°C mit 5 bis 50 Masse-% Fasergehalt schichtenförmig eingebracht werden.

2. Verfahren nach Anspruch 1, **dadurch gekennzeichnet, dass** die textilen Flächengebilde Gewebe und/oder Vliese sind, die im Verbund im Wechsel Kette/Schuss oder in 0 und 90° - Drehung zur Verarbeitungsrichtung aufgeschichtet und nach speziellen Strukturen realisiert werden, wobei
a) die textilen Flächengebilde aus metallisierten Acrylfasern und nichtmetallisierten Geweben oder Vliesen im Verbund eine alternierende Schichtenfolge entsprechend den Verbundtypen 1 und 2 bilden und vorzugsweise einen Massegehalt metallisierter Acrylfasern bis 10% enthalten, oder
b) die benachbarten textilen Flächengebilde aus metallisierten Acrylfasern wie im Verbundtyp 3 und 0 in elektrischem Kontakt miteinander stehen, einen elektrisch leitenden Kernbereich bilden oder der gesamte Verbund elektrisch leitfähig ist.

3. Verfahren nach einem der Ansprüche 1 bis 2, **dadurch gekennzeichnet, dass** die Einarbeitung der metallisierten Gewebe oder Vliese in thermoplastische Matrizes wie Polyethylen hoher Dichte, Polyethylen niedriger Dichte, Polypropylen, Polystyrol, Styrol-Acrylnitril, Acrylnitril-Styrol-Acrylester, Acrylnitril-Butadien-Styrolund auch in Polyamide Polyamid 11 und Polymamid 12sowie in niedrigschmelzende Mischpolyamide aus Polyamid 6 und Polyamid 6.6oder in duroplastische Matrizes wie Epoxidharz, ungesättigte Polyester und Polyurethane erfolgt.

4. Verfahren nach einem der Ansprüche 1 bis 3, **dadurch gekennzeichnet, dass** zur Anbindung der im textilen Flächengebilde enthaltenen metallisierten Acrylfaser an das verwendete Kunstoffmaterial ein Haftvermittler in die Polymermatrix eingebracht wird.

5. Verfahren nach einem der Ansprüche 1 bis 4, **dadurch gekennzeichnet, dass** die isolierenden bzw. unbeschichteten Faserkomponenten in den Verbundtypen 1 bis 3 Acrylfasern, Glasfasern, Aramidfasern, Kohlenstofffasern und/oder textile Synthesefasern sind.

## Claims

1. Process for producing electrically conductive fibre-reinforced polymer composites for protection against electromagnetic interference with an improved mechanical property level **characterised in that** a textile web of acrylic fibres or mixtures of metallised acrylic fibres with uncoated fibres coated with Al, Ni, Co, Cu or Ag or coated with an alloy of these metals, the metallised acrylic fibres having a fibre fineness of between 1 and 3.2 decitex [g/10,000 m], a fibre tear strength of 500 to 1100 MPa and an elongation at break of the fibres of 5 to 25% and having a total weight per surface unit of 50 to 500 g/m² with 2.5 g/m² to 100 g/m² metal deposits and/or 5 to 25% weight per surface unit of the metallic coat, is introduced into a thermoplastic polymer matrix by back-spraying or sheath-spraying or hot pressing at 150 to 220°C or laminating or winding processes with a thermosetting matrix with a fibre content of 5 to 50% by mass at 20 to 150°C in layer form.

2. Process according to claim 1 **characterised in that** the textile webs are woven fabrics and/or non-wovens which are constructed in layers as a composite with alternating web/weft or in a 0 and 90° rotation to the direction of processing and as special structures,
a) the textile webs of metallised acrylic fibres and non-metallised woven fabrics or non-wovens forming, in the composite, an alternating sequence of layers corresponding to composite types 1 and 2 and preferably have a content by mass of metallised acrylic fibres of up to 10% or
b) the adjacent textile webs of metallised acrylic fibres being in electrical contact to each other as in composite type 3 and 0, forming an electrically conductive core area or the entire composite being electroconductive.

3. Process according to one of claims 1 to 2 **characterised in that** the incorporation of the metallised woven fabrics or non-wovens takes place into thermoplastic matrices such as high density polyethylene, low density polyethylene, polypropylene, polystyrene, styrene acrylonitrile, acrylonitrile styrene acrylic ester, acrylonitrile butadiene styrene and also into polyamides polyamide 11 and polyamide 12 as well as into low-melting mixed polyamides of polyamide 6 and polyamide 6.6 or into thermosetting matrices such as epoxy resin, unsaturated polyesters and polyurethanes.

4. Process according to one of claims 1 to 3 **characterised in that**, for bonding of the metallised acrylic fibres contained in the textile web to the plastic material used, a coupling agent is incorporated into the polymer matrix.

5. Process according to one of claims 1 to 4 **characterised in that** the insulating and/or uncoated fibre components in the composite types 1 to 3 are acrylic fibres, glass fibres, aramide fibres, carbon fibres and/or textile synthetic fibres.

## Revendications

1. Procédé pour produire des composites polymères conducteurs renforcés de fibres, lesdits composites étant destinés à la protection contre l'interférence électromagnétique et présentant un niveau amélioré de propriétés mécaniques, **caractérisé en ce qu'**une structure bidimensionnelle textile composée de fibres acryliques, ladite structure ayant été revêtue de Al, Ni, Co, Cu ou Ag ou d'un alliage desdits métaux, ou bien composée de mélanges entre des fibres acryliques métallisées et des fibres non-revêtues, les fibres acryliques métallisées présentant une masse linéique comprise entre 1 et 3,2 décitex [g/10.000 m], une résistance à la rupture comprise entre 500 et 1.100 MPa et un allongement à la rupture compris entre 5 et 25 %, le poids totale rapporté à la surface étant compris entre 50 et 500 g/m² alors que le revêtement métallique compte pour 2,5 g/m² à 100 g/m² correspondant à un pourcentage du revêtement métallique compris entre 5 et 20 % du poids rapporté à la surface, est incorporée sous forme de couches soit dans une matrice polymère thermoplastique par injection arrière ou des deux côtés ainsi que par pressage à chaud, les températures étant comprises entre 150 et 220 °C, doit dans une matrice thermodurcissable par un procédé de laminage ou d'enroulage, les températures étant comprises entre 20 et 150 °C.

2. Procédé selon la revendication 1, **caractérisé en ce que** les structures bidimensionnelles textiles sont des tissus et/ou des non-tissés qui sont superposés au sein du composite en alternant chaîne/trame ou en effectuant des rotations de 0 et de 90 ° par rapport au sens machine, la réalisation suivant des structures particulières,
a) les structures bidimensionnelles textiles composées de fibres acryliques et de tissus ou non-tissés non-métallisés formant une suite de couches disposées en alternance selon les types de composite 1 et 2, la teneur en fibres acryliques métallisées pouvant préférentiellement atteindre jusqu'à 10 % en poids, ou
b) les structures bidimensionnelles textiles voisines composées de fibres acryliques métallisées étant en contact électrique les unes avec les autres comme dans les types de composite 3 et 0, formant ainsi une zone centrale conductrice d'électricité ou un composite conducteur d'électricité dans son intégralité.

3. Procédé selon l'une des revendications 1 à 2, **caractérisé en ce que** les tissus ou non-tissés métallisés sont incorporés soit dans des matrices thermoplastiques comme celles en polyéthylène haute densité, en polyéthylène basse densité, en polypropylène, en polystyrène, en styrène-acrylonitrile, en acrylonitrile-styrène-acrylester, en acrylonitrile-butadiène-styrène et également dans des polyamides tels que le polyamide 11 et le polyamide 12 ainsi que dans des mélanges à bas point de fusion de polyamides, lesdits mélanges étant composés de polyamide 6 et de polyamide 6.6, soit dans des matrices thermodurcissables comme celles en résine époxy, en polyesters insaturés et en polyuréthanes.

4. Procédé selon l'une des revendications 1 à 3 **caractérisé en ce qu'**un agent de pontage est incorporé dans la matrice polymère pour faire en sorte que la fibre acrylique métallisée contenue dans la structure bidimensionnelle textile et le matériau plastique mis en oeuvre entrent en liaison.

5. Procédé selon l'une des revendications 1 à 4, **caractérisé en ce que**, dans les types de composites 1 à 3, les composants fibreux isolants et/ou non-revêtus sont des fibres acryliques, des fibres de verre, des fibres d'aramide, des fibres en carbone et/ou des fibres textiles de synthèse.
